# EUROPÄISCHE PATENTANMELDUNG

(11) **EP 0 998 855 A2**
(43) Veröffentlichungstag der Anmeldung: **10.05.2000**
(21) Anmeldenummer: 99810985.4
(22) Anmeldetag: 29.10.1999
(51) Int. Cl.: A23L 3/00

(54) **Beschickungsbehälter für Lebensmittel**

(30) Priorität: 02.11.1998 CH 221098
(71) Anmelder: Zelgerm Management AG, 4133 Pratteln (CH)
(72) Erfinder: Blaha, Jirka, 49576 Weil am Rhein (DE); Kramer, Roland, 4146 Hochwald (CH); Saccavino, Cesare, 4203 Grellingen (CH); Zeller, Bruno, 4132 Muttenz (CH)
(74) Vertreter: Luchs, Willi

(57) **Zusammenfassung**

Ein Beschickungsbehälter (10) für eine Anlage zur Entkeimung insbesondere von Lebensmitteln, welcher eine Aufnahme der Lebensmittel bildet, kann in eine Kammer der Entkeimungsanlage für die an den Oberflächen zu entkeimenden Lebensmittel eingesetzt werden. Dieser Beschickungsbehälter (10) weist mehrere jeweils in einem Abstand zueinander gehaltene, aus einem dampfdurchlässigem Material hergestellte Hohlkörper (15, 35) auf, in welche die Lebensmittel einfüllbar sind. Die jeweiligen Hohlkörper (15, 35) sind zweckmässigerweise aus einem gasdurchlässigen Edelstahl-, einem Kunststoff- oder einem Textilgewebe hergestellt. Dies ermöglicht eine optimale Entkeimung der in diesen Hohlkörpern beschickten Lebensmittel.

## Beschreibung

Die Erfindung betrifft einen Beschickungsbehälter für eine Anlage zur Entkeimung insbesondere von Lebensmitteln, welcher eine Aufnahme der Lebensmittel bildet und in eine Kammer der Entkeimungsanlage für die an den Oberflächen zu entkeimenden Lebensmittel einsetzbar ist.

Bei bekannten Entkeimungsanlagen werden die Lebensmittel bis anhin üblicherweise in Säcke abgefüllt und hernach in die Behandlungskammer dieser Anlage zur Entkeimung eingesetzt. Bei der Entkeimung wird in der Kammer vorerst eine Vakuum erzeugt und danach Dampf mit beispielsweise einer Temperatur über 100°C eingeblasen. Dieser Dampf wird dann über eine vorgegebene Zeitdauer in dieser Kammer belassen, so dass sich das in Säcke abgefüllte Ladegut entkeimen kann. Mit dieser an sich bewährten Methode wird jedoch eine relativ lange Behandlungszeit benötigt, bis diese Lebensmittel auch im Zentrum der Säcke an ihren Oberflächen sterilisiert sind.

Der vorliegenden Erfindung wurde demgegenüber die Aufgabe zugrundegelegt, einen Beschickungsbehälter nach der eingangs erwähnten Gattung zu schaffen, welcher einfach und leicht bedienbar ausgebildet ist und mit ihm eine gegenüber dem bekannten Behälter kürzere Behandlungszeit bei einer gleichmässigen Durchdringung des Ladegutes erzielt wird. Ferner soll mit diesem Beschickungsbehälter auch eine einwandfreie Entkeimung von pulverförmigem oder von speziell empfindlichen Lebensmitteln ermöglicht werden.

Die Aufgabe ist erfindungsgemäss dadurch gelöst, dass mehrere aus einem dampfdurchlässigen Material hergestellte Hohlkörper vorgesehen sind, in welche die Lebensmittel einfüllbar sind.

Mit diesem erfindungsgemässen Beschickungsbehälter lassen sich die in diesen eingefüllten Lebensmittel, seien es pulver- oder andersförmige, sehr effizient und in einer sehr schonenden Art und Weise entkeimen. Solche Beschickungsbehälter sind ausserdem einfach herstellbar und sie ermöglichen eine leichte Bedienbarkeit beim Beschicken der Entkeimungsanlage.

Diese Hohlkörper sind jeweils sehr vorteilhaft aus einem Edelstahl-, einem Kunststoff- oder einem Textilgewebe in Zylinderform hergestellt, wodurch eine ausreichende Gasdurchlässigkeit ermöglicht und die in den Hohlkörper eingefüllten Lebensmittel schnell und gleichmässig vom Dampf durchdrungen werden.

Bei einer Entkeimungsanlage mit einer Behandlungskammer, in welche insbesondere solche erfindungsgemässen Beschickungsbehälter chargiert werden, ist erfindungsgemäss eine Trocknungseinrichtung vorgesehen, mittels welcher die in diese Kammer in den Beschickungsbehältern entkeimten Lebensmittel beschleunigt getrocknet werden können, hierdurch eine zusätzliche Verkürzung der Behandlungszeit bei gleichbleibender oder sogar verbesserter Qualität der Entkeimung erzielt wird.

Ausführungsbeispiele sowie weitere Vorteile der Erfindung sind anhand der Zeichnung näher erläutert. Es zeigt:
- Fig. 1: einen erfindungsgemässen Beschickungsbehälter in perspektivischer Darstellung,
- Fig.2: eine Frontansicht eines Beschickungsbehälter mit einer unterschiedlichen Anzahl von Hohlkörpern gegenüber demjenigen nach Fig. 1,
- Fig.3: eine Frontansicht von zwei aufeinander gestapelten erfindungsgemässen Beschickungsbehältern, und
- Fig.4: einen teilweisen Längsschnitt eines Hohlkörpers des Beschickungsbehälters nach Fig.3.

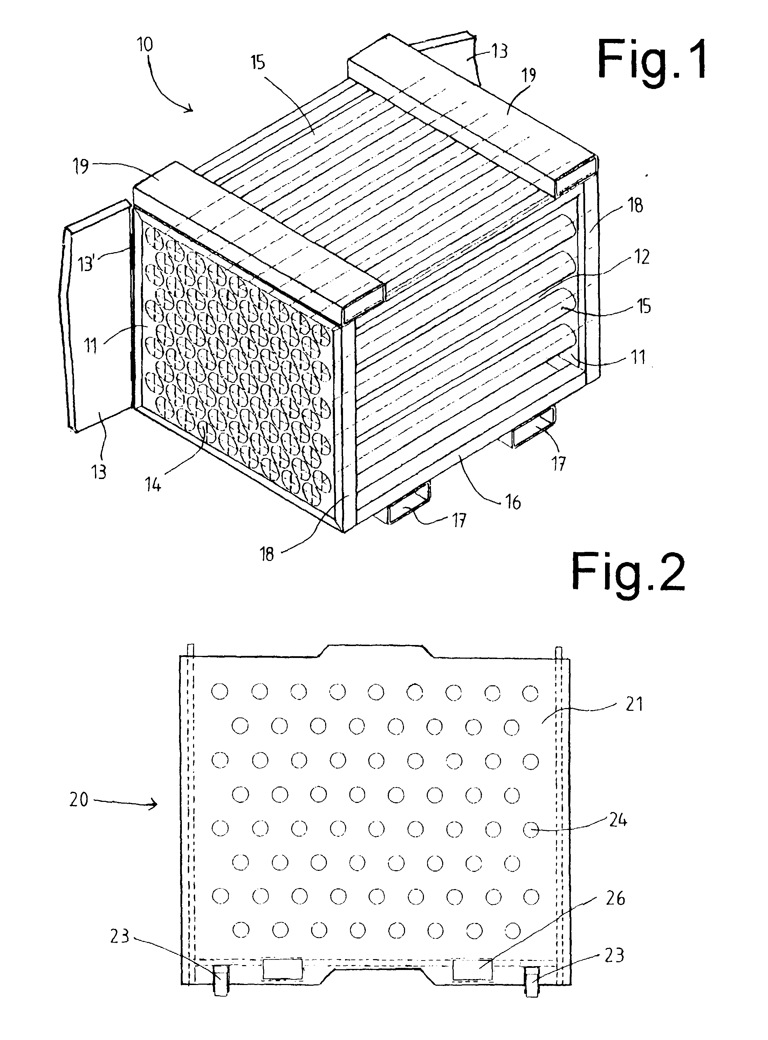

Fig. 1 zeigt einen Beschickungsbehälter 10 für eine nicht näher gezeigte Entkeimungsanlage, in welcher insbesondere Lebensmittel mit Vorteil nur an der Oberfläche entkeimt werden. Für die Behandlung kann es sich um pulverförmige Lebensmittel, wie Mehle, um Pfefferkörner, Teeblätter, Pilze, um geschnittene Wurzeln oder ähnlichem handeln. Eine solche Entkeimungsanlage weist zweckmässigerweise eine abschliessbare Kammer auf, in welcher ein oder mehrere Beschickungsbehälter 10 mit einem unbehandelten Lebensmittel eingesetzt werden. In dieser Kammer wird die Entkeimung mittels eines programmgesteuerten Ablaufes in der eingangs erläuterten an sich bekannten Weise durchgeführt.

Erfindungsgemäss sind mehrere zumindest teilweise aus einem dampfdurchlässigen Material gefertigte Hohlkörper 15 vorgesehen, in welche die Lebensmittel einfüllbar sind.

Im vorliegenden Ausführungsbeispiel sind diese Hohlkörper 15 aus länglichen Zylindern gebildet, welche in einem Rahmengestell in paralleler Anordnung zueinander gehalten sind. Dieses Rahmengestell besteht hierbei aus mehreren miteinander verbundenen äusseren Rahmenleisten 16, 18 und Verstärkungsprofilen 17, 19, an welchen die zylinder- oder rohrförmigen Hohlkörper 15 in zehn übereinander angeordneten Reihen von jeweils neun bzw. acht Hohlkörpern 15 pro Reihe gehalten sind. Letztere sind mit identischen Längen versehen und beiden Endes in je einer vom Rahmengestell gehaltenen Seitenplatte 11 befestigt, welchen konzentrisch zu den Hohlkörpern 15 angeordnete Öffnungen 14 zugeordnet sind. Diese Öffnungen 14 der Seitenplatten 11 sind von je einem angedeuteten Deckel 13, der beispielsweise seitlich am Rahmengestell via Scharniere 13' oder dergleichen schwenkbar gelagert ist, dicht verschliessbar. Sämtliche Bestandteile dieses Behälters 10 sind aus jeweils einem rostfreien Edelstahl gefertigt.

Durch diese Ausbildung des Beschickungsbehälters 10 ergibt sich im Rahmen der Erfindung ein weiterer Vorteil darin, dass dieser Behälter 10 beim Auffüllen mit Lebensmitteln in eine vertikale Position gestellt werden kann, bei der der hintere Deckel 13 bereits vorher geschlossen wird. Die entsprechenden Lebensmittel können dann oben in die Öffnungen 14 von Hand oder maschinell in die einzelnen Zylinder 15 eingefüllt werden. Nach dem Beschicken wird der vordere Deckel 13 ebenfalls geschlossen und der Behälter 10 kann dann wieder in die dargestellte horizontale Position gekippt werden, in der er in die Entkeimungsanlage eingesetzt wird. In dieser horizontalen Position sind die Lebensmittel für die Entkeimung in einer optimalen Verteilung in diesen Zylindern gehalten.

Aufgrund der Abstände zwischen den Hohlkörpern 15 sind Durchlasskanäle 12 gebildet, durch die alle Hohlkörper 15 rundum über ihre gesamte Länge vom Dampf beaufschlagt sind, wobei der Dampf in eine den Behälter 10 umschliessende Kammer der Anlage eingelassen wird. Der Dampf kann folglich gleichmässig in das Innere der Zylinder eindringen und die darin befindlichen Lebensmittel entkeimen. Die Abstände der Hohlkörper 15 zueinander sind vorzugsweise möglichst klein, d.h. bis zu einigen Millimetern, gehalten. Dies ermöglicht eine maximale Anzahl von Zylindern pro Volumen und es ist trotzdem gewährleistet, dass die einzelnen Zylinder, auch diejenigen, die sich im Zentrum des Behälters befinden, ausreichend mit Dampf versorgt sind.

Die aus einem Edelstahlgewebe hergestellte Hohlkörperwandung ist zum Beispiel aus einem ein- oder mehrmals gewickelten rostfreien feinmaschigen Stahlnetz und einem dieses umschliessenden Stützrahmen hergestellt. Anstelle eines Edelstahlgewebes kann im Rahmen der Erfindung aber auch ein Kunststoffgewebe, wie zum Beispiel ein Polymer, ein Textilgewebe, ein beschichtetes oder ein anderes Gewebematerial verwendet werden. Es kann auch eine Kombination von verschiedenen Geweben übereinander oder alternierend zueinander verwendet werden.

Der Stützrahmen besteht aus einem perforierten rostfreien Blech oder dergleichen. Vorteilhaft ist dieses Edelstahl- oder Kunststoffgewebe der Hohlkörper mit einer derartigen Dampfdurchlässigkeit versehen, dass in diesem Hohlkörper pulverförmiges Lebensmittel aufnehmbar ist, ohne dass dieses Pulver bei der Entkeimung aus dem Hohlkörper austreten würde. Gleichsam soll aber ein maximal möglicher Dampfeintritt gewährleistet sein, um eine optimale Entkeimung zu erreichen.

Fig.2 zeigt einen Beschickungsbehälter 20, der an sich gleich wie derjenige nach Fig. 1 aufgebaut und daher nicht mehr in jedem Detail erläutert ist. Bei diesem ist wiederum eine frontseitige Seitenplatte 21 mit acht übereinander angeordneten Reihen von Hohlkörpern zu je acht bzw. neun Öffnungen 24 vorgesehen. Der Behälter 20 ist auf vier Rollen 23 fahrbar abgestützt und es sind wiederum Verstärkungsprofile 26 vorgesehen.

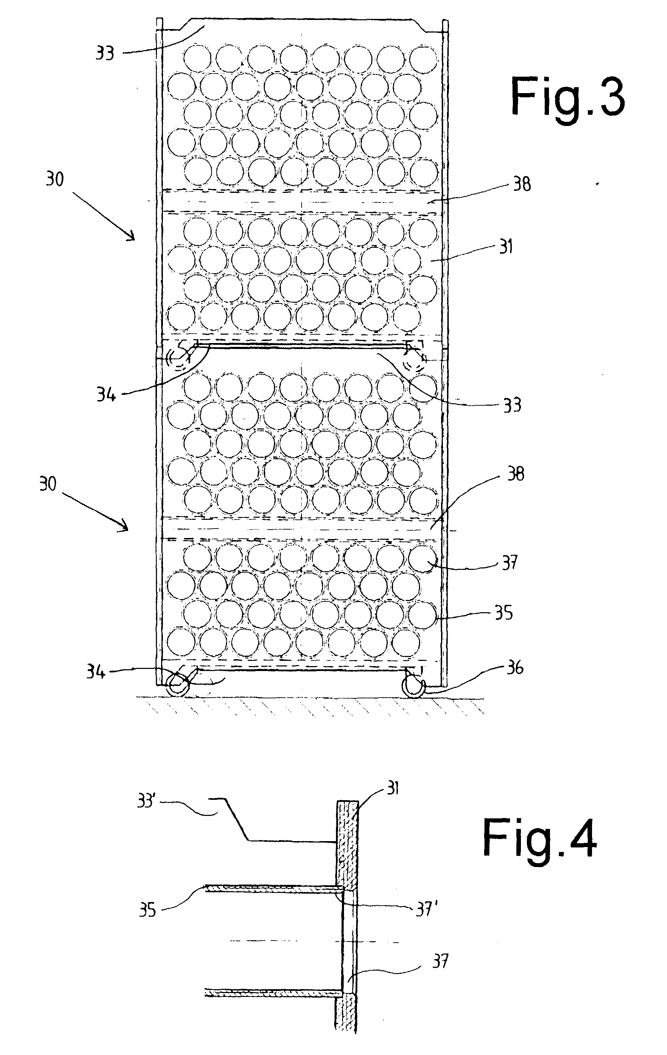

Fig.3 zeigt zwei aufeinander gestapelte identische Beschickungsbehälter 30, die ebenfalls an sich gleich wie derjenige nach Fig.1 aufgebaut sind. Die Rahmengestelle dieser Behälter 30 verfügen über entsprechende Zentriermittel 33, 34, welche den oberen Behälter 30 auf dem unteren zentrieren und ihn gegen ein seitliches Verrutschen sichern. Diese Zentriermittel 33, 34 sind als zusammenwirkende Feder/Nut-Verbindungen 33, 34 ausgestaltet. Ferner ist noch annähernd in der Mitte des Rahmengestelles eine Querstütze 38 zwecks Erhöhung der Stabilität des Behälters 30 angebracht. Es sei hierzu noch vermerkt, dass solche Behälter eine Höhe bzw. eine Länge bis annähernd einen Meter und die Durchmesser der Hohlkörper bis zu 150 Millimetern betragen können.

Fig.4 zeigt die Befestigung des rohrförmigen Hohlkörpers 35 in der Seitenplatte 31. Dies ist durch eine Ringnut 37' in der Öffnung 37 realisiert, in welche der Hohlkörper 35 bündig gehalten und darin bspw. eingeschweisst ist. Ferner ist noch ein Zentriermittel 33' ersichtlich, welches eine Zentrierung des oberen Behälters 30 auch in Längsrichtung der Hohlkörper 35 gewährleistet.

Die Erfindung erstreckt sich des weiteren auf eine nicht näher veranschaulichte Entkeimungsanlage mit einer verschliessbaren Behandlungskammer, in welcher eine oder mehrere der Beschickungsbehälter 10, 20, 30 aufnehmbar sind, wobei diese Kammer an wenigstens eine Vakuumpumpe, an eine Dampfquelle und an einen Luftanschluss angeschlossen ist.

Erfindungsgemäss ist eine Trocknungseinrichtung vorgesehen, mittels welcher die entkeimten Lebensmittel im Beschickungsbehälter in der Kammer beschleunigt getrocknet werden können. Diese Trocknungseinrichtung umfasst einen Ventilator sowie ein Heiz- und Kühlregister. Je nach dem Zustand in der Kammer der Anlage kann über diese Trocknungseinrichtung eine Umluft mit gekühlter oder aufgeheizter Luft in der Kammer umgewälzt werden, wobei die Luft von diesem Heiz- oder Kühlregister auf die gewünschte Temperatur gebracht wird.

Die Erfindung ist mit den oben erläuterten Ausführungsbeispielen ausreichend dargetan. Sie könnte jedoch noch in anderen Varianten ausgeführt sein. Im Prinzip könnte der Hohlkörper auch aus anderen als runden Querschnittsformen, wie zum Beispiel aus ovalen, elliptischen, annähernd rechteckigen mit oder ohne abgerundeter Ecken oder ähnlichen Formen gebildet sein. Ein Hohlkörper könnte auch plattenförmig mit mehreren darin vorgesehenen Bohrungen ausgebildet sein. Das Edelstahlgewebe könnte auch durch ein perforiertes rostfreies Blech oder ähnlichem realisiert sein. Die Hohlkörper könnten selbstverständlich auch anders als annähernd horizontal, d.h. in einer beliebigen räumlichen Lage im Beschickungsbehälter angeordnet sein.

## Patentansprüche

1. Beschickungsbehälter für eine Anlage zur Entkeimung insbesondere von Lebensmitteln, welcher eine Aufnahme der Lebensmittel bildet und in eine Kammer der Entkeimungsanlage für die an den Oberflächen zu entkeimenden Lebensmittel einsetzbar ist, dadurch gekennzeichnet, dass mehrere aus einem dampfdurchlässigen Material hergestellte Hohlkörper (15, 35) vorgesehen sind, in welche die Lebensmittel einfüllbar sind.

2. Beschickungsbehälter nach Anspruch 1, dadurch gekennzeichnet, dass die jeweiligen Hohlkörper (15, 35) zumindest teilweise aus einem gasdurchlässigen Gewebe hergestellt sind, welches aus einem Edelstahlgewebe, einem Kunststoffgewebe, einem Textilgewebe, aus einem anderen Gewebematerial oder aus einer Kombination verschiedener Materialien besteht.

3. Beschickungsbehälter nach Anspruch 1 oder 2, dadurch gekennzeichnet, dass die Hohlkörper (15, 35) in dem in der Kammer eingesetzten Zustand in annähernd horizontaler oder in einer beliebigen räumlichen Lage angeordnet sind.

4. Beschickungsbehälter nach einem der vorhergehenden Ansprüche 1 bis 3, dadurch gekennzeichnet, dass die Hohlkörper (15, 35) aus länglichen Zylindern bestehen, welche jeweils mit einem runden, elliptischen, rechtekkigen mit oder ohne abgerundeten Ecken oder einem andersförmigen Querschnitt versehen sind.

5. Beschickungsbehälter nach Anspruch 4, dadurch gekennzeichnet, dass die Hohlkörper (15, 35) in einem Rahmengestell in mehreren übereinander angeordneten Reihen beabstandet oder aneinanderliegend gehalten sind und durch ihre identischen Längen beidseitig von je einem einzigen Deckel (13) verschliessbar sind.

6. Beschickungsbehälter nach einem der vorhergehenden Ansprüche, dadurch gekennzeichnet, dass das die Wandung bildende Gewebematerial der Hohlkörper (15, 35) mit einer derartigen Dampfdurchlässigkeit ausgebildet ist, dass in diesem Hohlkörper (15, 35) pulverförmiges Lebensmittel aufnehmbar ist, ohne dass dieses Pulver bei der Entkeimung aus dem Hohlkörper austreten kann.

7. Beschickungsbehälter nach einem der vorangehenden Ansprüche 2 bis 6, dadurch gekennzeichnet, dass die Hohlkörperwandung jeweils aus einem zylindrisch geformten rostfreien feinmaschigen Stahlnetz und einem dieses umgebenden Stützrahmen aus einem perforierten Blech oder dergleichen erzeugt ist.

8. Entkeimungsanlage, mit einer verschliessbaren Behandlungskammer, in welcher eine oder mehrere der Beschickungsbehälter insbesondere nach einem der vorangehenden Ansprüche aufnehmbar sind, wobei diese Kammer an wenigstens eine Vakuumpumpe, an eine Dampfquelle und an einen Luftanschluss angeschlossen ist, dadurch gekennzeichnet, dass eine Trocknungseinrichtung vorgesehen ist, mittels welcher die entkeimten Lebensmittel im Beschickungsbehälter in der Kammer beschleunigt getrocknet werden.
